# EUROPEAN PATENT APPLICATION

(11) **EP 3 297 212 A1**
(43) Date of publication of application: **21.03.2018**
(21) Application number: 17191037.5
(22) Date of filing: 31.10.2011
(51) Int. Cl.: H04L 12/24

(54) **COMMUNICATION SYSTEM, CONTROL APPARATUS, PACKET FORWARDING PATH CONTROL METHOD, AND PROGRAM**

(30) Priority: 01.11.2010 JP 2010245229
(62) Divisional of application: 11837966.8
(71) Applicant: NEC Corporation, Tokyo 108-8001, (JP)
(72) Inventor: NUMATA, Masahi, Tokyo, Tokyo 108-8001 (JP)
(74) Representative: Vossius & Partner Patentanwälte Rechtsanwälte mbB

(57) **Abstract**

The present invention achieves both detailed path control based on data traffic and improved usability in setting and operation. A communication system includes: a plurality of data forwarding nodes each comprising a packet processing unit processing an incoming packet in accordance with a processing rule (packet handling operation) in which a process to be applied to a packet and a matching rule for specifying a packet to which the process is applied are associated with each other; and a control apparatus capable of using at least two logical network topologies each obtained by applying a different path calculation policy to a physical network topology formed by the plurality of data forwarding nodes, selecting a logical network topology determined per data traffic and determining a packet forwarding path, and setting a processing rule (packet handling operation) realizing the packet forwarding path in data forwarding nodes on the packet forwarding path.

## Description

### [Technical Field]

### (REFERENCE TO RELATED APPLICATION)

The present invention is based upon and claims the benefit of the priority of Japanese patent application No. 2010-245229, filed on November 1, 2010, the disclosure of which is incorporated herein in its entirety by reference thereto.

The present invention relates to a communication system, a control apparatus, a packet forwarding path control method, and a program. In particular, it relates to a communication system, a control apparatus, a packet forwarding path control method, and a program for realizing communication by using a node that processes an incoming packet in accordance with a processing rule (packet handling operation) matching the incoming packet.

### [Background]

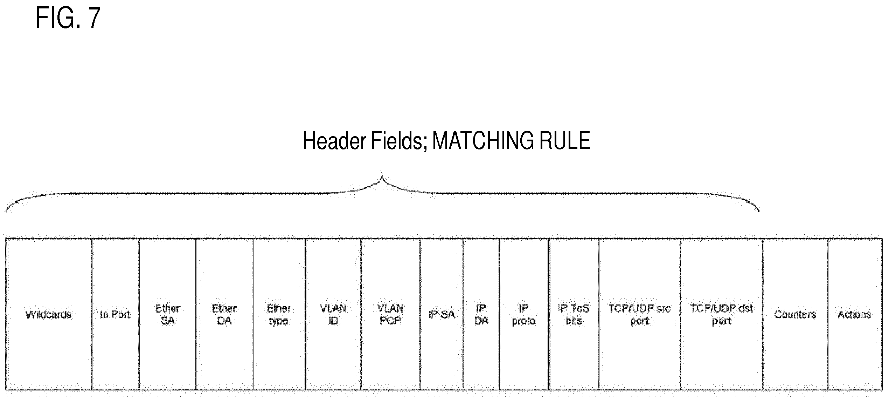

Recently, a technique referred to as OpenFlow has been proposed (see Patent Literature 1 and Non Patent Literatures 1 and 2). OpenFlow recognizes communications as end-to-end flows and performs path control, failure recovery, load balancing, and optimization on a per-flow basis. An OpenFlow switch according to Non Patent Literature 2 has a secure channel for communication with an OpenFlow controller that serves as a control apparatus and operates according to a flow table suitably added or rewritten by the OpenFlow controller. In a flow table, a set of the following three is defined for each flow: a matching rule (Header Fields) against which a packet header is matched; flow statistical information (Counters); and Actions that define processing contents (see Fig. 7).

For example, if the OpenFlow switch receives a packet, the OpenFlow switch searches the flow table for an entry having a matching rule (see Header Fields in Fig. 7) that matches header information of the incoming packet. If the OpenFlow switch finds an entry matching the incoming packet as a result of the search, the OpenFlow switch updates the flow statistical information (Counters) and processes the incoming packet based on a processing content (transmission, flooding, drop, etc. of the packet from a specified port) written in the Action field of the entry. If the OpenFlow switch does not find an entry matching the incoming packet as a result of the search, the OpenFlow switch forwards the incoming packet to the OpenFlow controller via the secure channel, to request the OpenFlow controller to determine a packet path based on the source and destination nodes of the incoming packet. After receiving a flow entry realizing the packet path, the OpenFlow switch updates the flow table. In this way, by using an entry stored in the flow table as a processing rule (packet handling operation), the OpenFlow switch executes packet forwarding.

In addition, Patent Literature 2 discloses a detour route determination apparatus that includes: an end point candidate extraction means for extracting end point candidates of a detour path on the basis of topology information of a network acquired from a network information collection device and information about a detour target link; a traffic communication information acquisition means for acquiring traffic communication information of the detour target link from a traffic communication information creation device; a detour target traffic volume determination means for determining detour target traffic volume detoured from the detour target link on the basis of the traffic communication information of the detour target link and a target band; a detour end point determination means for determining start and end points of the detour path on the basis of the detour target traffic volume and the traffic communication information of the detour target link; and a route calculation means for calculating a detour route connecting the start and end points of the detour path. According to Patent Literature 2, with the above configuration, the detour route determination apparatus can promptly remove excessive traffic from a link where a link utilization rate is increased or where congestion is caused.

### [Citation List]

### [Patent Literature]

[Patent Literature 1] International Publication No. 2008/095010
[Patent Literature 2] Japanese Patent Kokai Publication No. 2009-200995A

### [Non Patent Literature]

[Non Patent Literature 1] Nick McKeown, and seven others, "OpenFlow: Enabling Innovation in Campus Networks", [online], [Searched on October 6, 2010], Internet <URL:http://www.openflowswitch.org/documents/openflow-wp-latest.p df>
[Non Patent Literature 2] "OpenFlow Switch Specification" Version 1.0.0. (Wire Protocol 0x01) [Searched on October 6, 2010], Internet <URL:http://www.openflowswitch.org/documents/openflow-spec-v1.0.0 .pdf>

### [Summary]

### [Technical Problem]

The following analyses are given by the present invention.

According to OpenFlow in Patent Literature 1 and Non Patent Literatures 1 and 2, the OpenFlow controller executes end-to-end path calculation based on a physical network topology formed by OpenFlow switches.

Meanwhile, along with recent advances in cloud services, higher quality is demanded for data center services. Regarding mission critical services, there is a demand for improving quality by controlling a forwarding path per data traffic.

The following methods are examples of a forwarding path determination method in accordance with a certain operation policy.
Method 1) Link state method:
   A weight is given to each link connecting data forwarding nodes. A path having the minimum total link weight between data forwarding nodes is selected. Data-traffic forwarding paths are controlled by changing link weights.
Method 2) Policy routing method:
   A forwarding path is determined per network entry port, data forwarding node, or data traffic type, and data is forwarded to the determined path. Data-traffic forwarding paths are controlled by changing a data traffic type and a forwarding path.
Method 3) Equal-cost multipath method:
   If a plurality of paths have an equal cost, hash values or the like in headers in data traffic are used to forward data to suitable paths. Generally, data-traffic forwarding paths cannot be controlled.

According to the above method 1, since the same path is always calculated for the same pair of source and destination nodes, detailed path control per data traffic cannot be achieved, counted as a problem. In addition, if a link weight is changed, the entire network is affected. Thus, it is difficult to predict a behavior after such change, counted as a problem.

According to method 2, detailed control is possible. However, to execute settings, a data forwarding node at a network entry port and a data forwarding node at a network exit port need to be grasped per data traffic. Thus, a large amount of labor is required for operation, counted as a problem. In addition, with recent advances in server virtualization techniques such as live migration techniques, physical locations of servers are frequently changed. Thus, since it is difficult to determine a data forwarding node at a data traffic entry port and a data forwarding node at a data traffic exit port, settings cannot be made, counted as a problem. In addition, even if settings are made, data cannot always be forwarded to an optimum path intended by the operator, counted as a problem.

In addition, since method 3 generally relies on the hardware logic of data forwarding nodes, settings are not necessary. However, control per data traffic cannot be achieved as in method 1, counted as a problem.

The present invention has been made in view of the above circumstances and provides a communication system, a control apparatus, a packet forwarding path control method, and a program capable of achieving both detailed path control based on data traffic and improved usability in setting and operation.

### [Solution to Problem]

According to a first aspect of the present invention, there is provided a communication system, including: a plurality of data forwarding nodes each comprising a packet processing unit processing an incoming packet in accordance with a processing rule (packet handling operation) in which a process to be applied to a packet and a matching rule for specifying a packet to which the process is applied are associated with each other; and a control apparatus capable of using at least two logical network topologies each obtained by applying a different path calculation policy to a physical network topology formed by the plurality of data forwarding nodes, selecting a logical network topology determined per data traffic and determining a packet forwarding path, and setting a processing rule (packet handling operation) realizing the packet forwarding path in data forwarding nodes on the packet forwarding path.

According to a second aspect of the present invention, there is provided a control apparatus, connected to a plurality of data forwarding nodes each comprising a packet processing unit processing an incoming packet in accordance with a processing rule (packet handling operation) in which a process to be applied to a packet and a matching rule for specifying a packet to which the process is applied are associated with each other and capable of using at least two logical network topologies each obtained by applying a different path calculation policy to a physical network topology formed by the plurality of data forwarding nodes, selecting a logical network topology determined per data traffic and determining a packet forwarding path, and setting a processing rule realizing (packet handling operation) the packet forwarding path in data forwarding nodes on the packet forwarding path.

According to a third aspect of the present invention, there is provided a packet forwarding path control method, including steps of: causing a control apparatus, connected to a plurality of data forwarding nodes each comprising a packet processing unit processing an incoming packet in accordance with a processing rule (packet handling operation) in which a process to be applied to a packet and a matching rule for specifying a packet to which the process is applied are associated with each other, to select a logical network topology determined per data traffic from at least two logical network topologies each obtained by applying a different path calculation policy to a physical network topology formed by the plurality of data forwarding nodes and determine a packet forwarding path; and causing the control apparatus to set a processing rule (packet handling operation) realizing the packet forwarding path in data forwarding nodes on the packet forwarding path. This method is associated with a certain machine, that is, with the control apparatus setting processing rules (packet handling operations) in packet forwarding nodes.

According to a fourth aspect of the present invention, there is provided a program, causing a control apparatus, connected to a plurality of data forwarding nodes each comprising a packet processing unit processing an incoming packet in accordance with a processing rule (packet handling operation) in which a process to be applied to a packet and a matching rule for specifying a packet to which the process is applied are associated with each other, to execute processes of: selecting a logical network topology determined per data traffic from at least two logical network topologies each obtained by applying a different path calculation policy to a physical network topology formed by the plurality of data forwarding nodes and determining a packet forwarding path; and setting a processing rule (packet handling operation) realizing the packet forwarding path in data forwarding nodes on the packet forwarding path. This program can be recorded in a computer-readable storage medium. Namely, the present invention can be embodied as a computer program product.

### [Advantageous Effects of Invention]

The present invention can achieve both detailed path control based on a packet feature and improved usability in setting and operation.

### [Brief Description of Drawings]

Fig. 1 is a diagram illustrating an outline of the present invention.
Fig. 2 is a diagram illustrating a relationship between a physical network topology and a pair of logical network topologies.
Fig. 3 is another diagram illustrating a relationship between the physical network topology and a pair of logical network topologies.
Fig. 4 is a diagram illustrating a configuration of a control apparatus according to a first exemplary embodiment of the present invention.
Fig. 5 is a flow chart illustrating an operation according to the first exemplary embodiment of the present invention.
Fig. 6 is a diagram illustrating an operation according to the first exemplary embodiment of the present invention.
Fig. 7 is a diagram illustrating a configuration of a flow entry disclosed in Non Patent Literature 2.

### [Description of Embodiments]

First, an outline of the present invention will be described. The present invention can be realized by: a plurality of data forwarding nodes each comprising a packet processing unit processing an incoming packet in accordance with a processing rule (packet handling operation) in which a process to be applied to a packet and a matching rule for specifying a packet to which the process is applied are associated with each other; and a control apparatus executing path control by setting a processing rule (packet handling operation) in these data forwarding nodes.

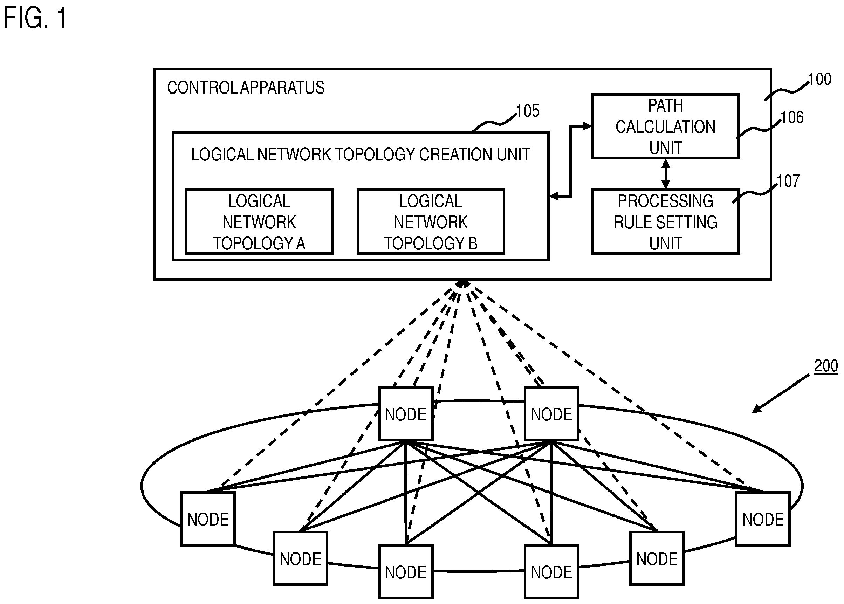

As illustrated in Fig. 1, the control apparatus includes: a path calculation unit 106 calculating a packet forwarding path; a processing rule setting unit (packet handling operation setting unit) 107 setting a processing rule (packet handling operation) realizing the packet forwarding path; and a logical network topology creation unit 105 creating and storing at least two logical network topologies each obtained by applying a different path calculation policy to a physical network 200 formed by the plurality of data forwarding nodes. The control apparatus selects, depending on data traffic, one of the at least two logical network topologies (logical network topology A or B in Fig. 1), determines a packet forwarding path, and sets a processing rule (packet handling operation) realizing the packet forwarding path in data forwarding nodes on the packet forwarding path.

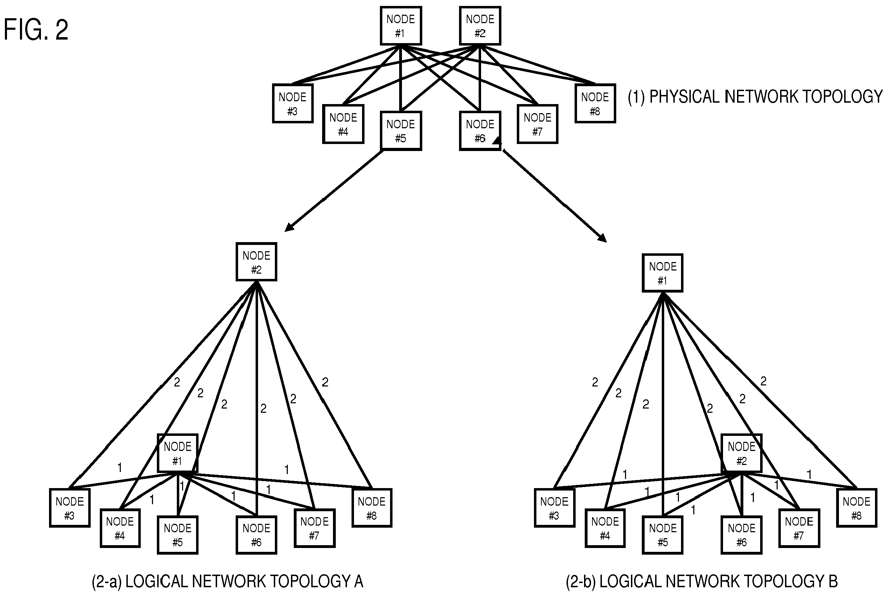

Next, the logical network topologies will be described. In the upper portion in Fig. 2, (1) physical network topology is illustrated, specifying connection of data forwarding nodes ("node" in Fig. 2). Such physical network topology can be established/updated by using a function such as LLDP (Link Layer Discovery Protocol) held in each of the data forwarding nodes.

In the lower portion in Fig. 2, (2-a) and (2-b) logical network topologies are illustrated, which are obtained by applying weight information (corresponding to a distance, a band, a fee, for example) as a path calculation policy to each link in the physical network topology. For example, if the shortest distance from node #3 to node #8 is calculated in (2-a) logical network topology A, the shortest path of distance 3 (node #3 - node #1 - node #8) is obtained. On the other hand, in (2-b) logical network topology B, the shortest path of distance 3 (node #3 - node #2 - node #8) is obtained.

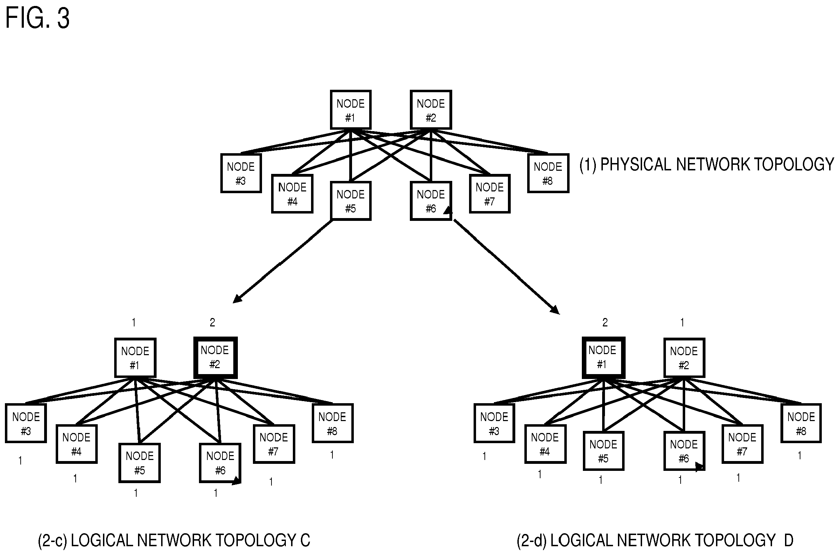

Likewise, in the lower portion in Fig. 3, (2-c) and (2-d) logical network topologies are illustrated, which are obtained by applying weight information (corresponding to an apparatus processing speed) as a path calculation policy to each node in the physical network topology. In this example too, if the shortest path from node #3 to node #8 is calculated in (2-c) logical network topology C, the shortest path of distance 4 (node #3 - node #1 - node #8) is obtained. On the other hand, in (2-d) logical network topology D, the shortest path of distance 4 (node #3 - node #2 - node #8) is obtained.

As described above, different calculation policies are applied to a certain physical network topology, to create a plurality of logical network topologies. By causing the control apparatus 100 to suitably use logical network topologies as described above per data traffic, it is possible to achieve both detailed path control based on a packet feature and improved usability in setting and operation.

Of course, a logical network topology having both link weights in Fig. 2 and node weights can be used. If the physical network topology includes additional information such as services used by clients, such items of information can also be used.

In addition, in Fig. 2, all the link weight information differs between logical network topologies A and B. However, this is only to facilitate understanding of the present invention. The present invention is applicable, as long as at least one item of the link weight information differs. As described with reference to Fig. 3, if at least one item of the link or node weight information differs, the shortest path including the link is accordingly changed. Thus, it is possible to change a path for data traffic that may use the link.

### [First exemplary embodiment]

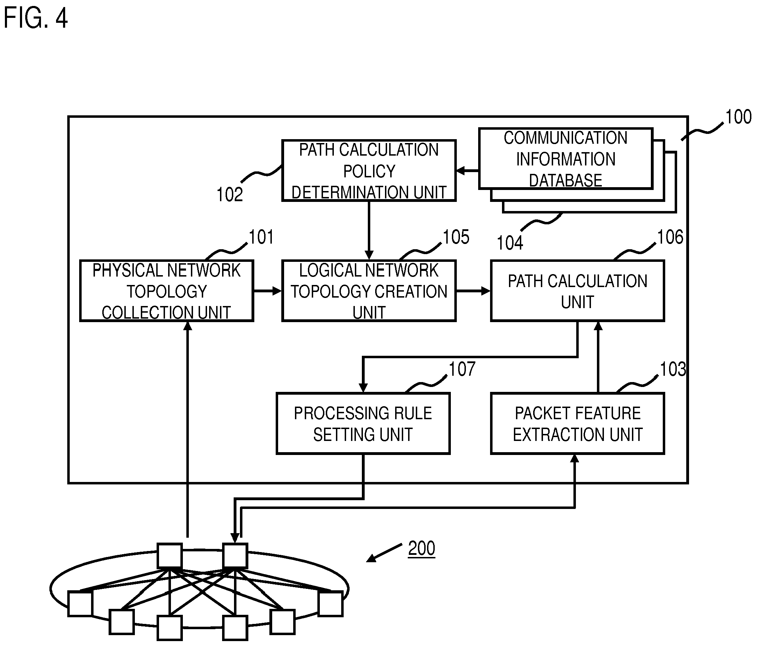

Next, a first exemplary embodiment of the present invention will be described in detail with reference to the drawings. Fig. 4 is a block diagram illustrating a configuration of a control apparatus according to a first exemplary embodiment of the present invention.

Fig. 4 illustrates a control apparatus 100 including a physical network topology collection unit 101, a path calculation policy determination unit 102, a packet feature extraction unit 103, a communication information database 104, a logical network topology creation unit 105, a path calculation unit 106, and a processing rule setting unit (packet handling operation setting unit) 107. Fig. 4 also illustrates a physical network 200.

The physical network 200 is formed by a plurality of data forwarding nodes illustrated as squares at the bottom left in Fig. 4. The present exemplary embodiment will be described assuming that the data forwarding nodes are formed by OpenFlow switches in Non Patent Literature 2.

Next, each unit of the control apparatus 100 will be described. The physical network topology collection unit 101 collects and stores a physical network topology indicating connection among the data forwarding nodes in the physical network 200. Other than the above LLDP, such physical network topology can be established by using a known network topology establishment method.

The path calculation policy determination unit 102 refers to, for example, statistical information about traffic flowing in the physical network or various client information stored in the communication information database 104 and determines a path calculation policy to be applied to the physical network topology. For example, if traffic from certain users is congested in a certain time period, a mission critical service is separated from other services, and different path calculation policies are created and applied to the respective services. In this way, decrease in the quality of the mission critical service can be prevented.

In the present exemplary embodiment, the path calculation policy determination unit 102 determines weight information about each link in the physical network topology per data traffic as a path calculation policy. By changing the weight information, it is possible to set different paths for data traffic of a certain service of a client and for other data traffic.

When receiving a request message (Packet-In) for setting a processing rule (packet handling operation) from a data forwarding node, the packet feature extraction unit 103 notifies the path calculation unit 106 of a feature of a packet for which a packet forwarding path is calculated. For example, the packet feature extraction unit 103 may notify the path calculation unit 106 of the packet itself received from the data forwarding node or packet information included in the request message (Packet-In) for setting a processing rule (packet handling operation).

The communication information database 104 stores various client information and data traffic statistical information. If each data forwarding node is an OpenFlow switch, as the data traffic statistical information, the communication information database 104 can collect flow statistical information (Stats) recorded by each switch (see Non Patent Literatures 1 and 2).

The logical network topology creation unit 105 refers to path calculation policies calculated by the path calculation policy determination unit 102 and creates and stores logical network topologies. The logical network topologies are created by applying different weight information to the links in a physical network topology. For example, the logical network topology creation unit 105 creates logical network topologies A and B in which weights 10 and 100 are set to a single physical link L1, respectively.

The path calculation unit 106 selects a logical network topology on the basis of a packet feature supplied from the packet feature extraction unit 103, calculates a packet forwarding path by using the selected logical network topology, and outputs the packet forwarding path to the processing rule setting unit (packet handling operation setting unit) 107. In this way, even if the same pair of source and destination nodes is used, since paths can be calculated by using logical network topologies having different weights, different packet forwarding paths can be obtained, depending on the packet feature, namely, the data traffic. A logical network topology can be selected based on a correspondence relationship between a packet feature (data traffic) and the logical network topology predetermined by the path calculation policy determination unit or the like.

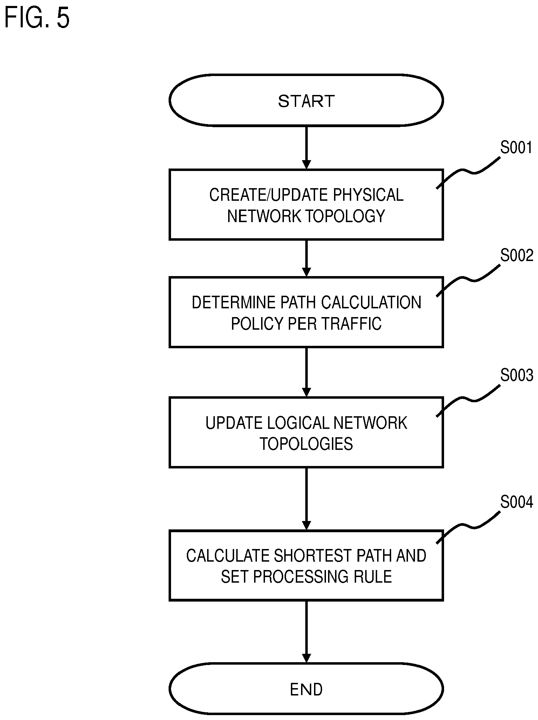

The processing rule setting unit (packet handling operation setting unit) 107 creates a processing rule (packet handling operation), based on a matching rule (see Fig. 5) for specifying a path control target packet extracted by the packet feature extraction unit 103 and a processing content defining a destination node of the packet on the shortest path calculated by the path calculation unit 106. In addition, the processing rule setting unit (packet handling operation setting unit) 107 sets the processing rule (packet handling operation) in data forwarding nodes on the shortest path.

Each of the units (processing means) of the control apparatus 100 in Fig. 4 can be realized by a computer program that causes a computer constituting the control apparatus 100 to use hardware thereof and execute each of the above processes.

Next, an operation of the present exemplary embodiment will be described in detail with reference to the drawings. Fig. 5 is a flow chart illustrating an operation of the control apparatus 100.

In Fig. 5, first, when the system is activated, the physical network topology collection unit 101 of the control apparatus 100 collects a physical network topology (step S001).

Next, the path calculation policy determination unit 102 refers to various client information and traffic information and determines a path calculation policy per data traffic (step S002).

Next, the logical network topology creation unit 105 applies path calculation policies to the physical network topology and creates or updates logical network topologies (step S003).

When receiving a packet feature from the packet feature extraction unit 103, the path calculation unit 106 selects a logical network topology corresponding to data traffic corresponding to the packet feature and calculates the shortest path. Next, based on a matching rule (see Fig. 5) for specifying the path control target packet extracted by the packet feature extraction unit 103 and a processing content defining a destination node of the packet on the shortest path calculated by the path calculation unit 106, the processing rule setting unit (packet handling operation setting unit) 107 creates and sets a processing rule (packet handling operation) in data forwarding nodes on the shortest path (step S004).

After the processing rule (packet handling operation) is set, the data forwarding nodes forward incoming packets in accordance with the processing content defined in the corresponding processing rule (packet handling operation). If a data forwarding node cannot find a processing rule (packet handling operation) that matches an incoming packet, the data forwarding node requests the control apparatus 100 to set a processing rule (packet handling operation). This operation of the data forwarding node is the same as that of the OpenFlow switch described above.

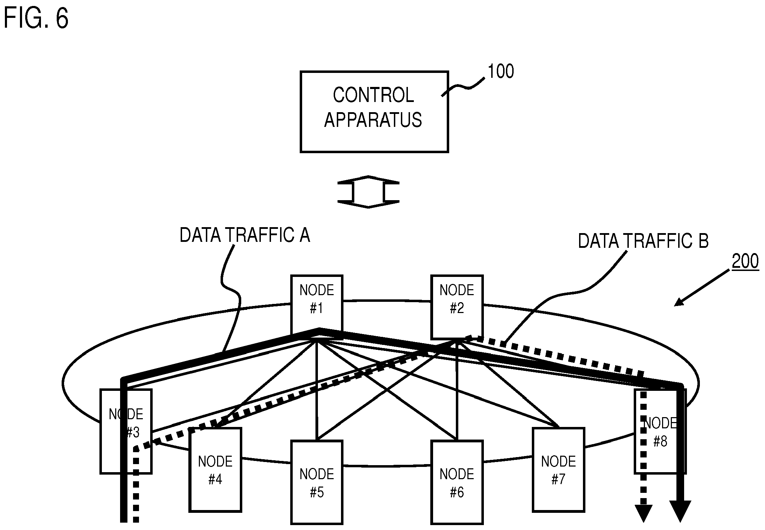

Thus, by selecting a logical network topology and calculating a path per data traffic, one data traffic (data traffic A) and another data traffic (data traffic B) can take different paths, as illustrated in Fig. 6. In Fig. 6, the same pair of data traffic entry and exist ports, that is, nodes #3 and #8, are used. However, since different types of data traffic are detected based on packet headers or the like, different logical network topologies are applied as illustrated in Figs. 2 and 3 and different shortest paths are calculated.

Thus, according to the first exemplary embodiment of the present invention, forwarding paths of data traffic forwarded in a single physical network can be separated easily and in accordance with the respective policies, without relying on the above method 2 or 3. This is because a plurality of path calculation policies are stored and a different path calculation policy can be applied to each data traffic.

In addition, according to the first exemplary embodiment of the present invention, as compared with the above method 2, a forwarding path per data traffic can be set more easily. This is because determination of data traffic and setting of a path calculation policy are executed independently.

In addition, according to the first exemplary embodiment of the present invention, a path calculation policy can also be determined more easily. This is because a plurality of path calculation policies are stored and the path calculation policies are calculated independently. As a result, since the impact of a change in path calculation policy is restrictive, a behavior after the change is easier to understand.

### [Second exemplary embodiment]

Next, a second exemplary embodiment of the present invention will be described. The second exemplary embodiment of the present invention can be realized by a configuration similar to that according to the above first exemplary embodiment. Thus, the second exemplary embodiment will be described with a focus on the difference.

In the above first exemplary embodiment, weight information about the links is used as a path calculation policy. However, in the second exemplary embodiment of the present invention, in addition to such link weight information, information about a band that can be used by each link (upper-limit band information) is used as a path calculation policy.

If a certain link is about to exceed the upper-limit band, the control apparatus 100 sets a processing rule (packet handling operation) so that the link does not exceed the band. For example, a processing rule (packet handling operation) for causing a data forwarding node at a network entry port to execute data traffic policing (packet discarding) is set. In this way, QoS can be assured.

Thus, according to the present exemplary embodiment, in addition to meritorious effects of the first exemplary embodiment, network congestion of a certain data traffic can be prevented.

While preferable exemplary embodiments of the present invention have thus been described, the present invention is not limited thereto. Various modifications, substitutions, or adjustments can be made without departing from the basic technical concept of the present invention.

For example, in the second exemplary embodiment, a data forwarding node at a network entry port executes data traffic policing (packet discarding). However, needless to say, the control apparatus 100 may calculate a packet forwarding path so that packets avoid the certain link and take a detour.

In addition, in the first and second exemplary embodiments, the control apparatus 100 includes the physical network topology collection unit 101, the path calculation policy determination unit 102, the packet feature extraction unit 103, the communication information database 104, the logical network topology creation unit 105, the path calculation unit 106, and the processing rule setting unit 107. However, for example, the path calculation policy determination unit 102, the communication information database 104, and the logical network topology creation unit 105 may be arranged in an apparatus different from the control apparatus 100, and the control apparatus 100 may be configured to be capable of accessing these units as needed.

The entire disclosures of the above Patent Literatures and Non Patent Literatures are incorporated herein by reference thereto. Modifications and adjustments of the exemplary embodiments are possible within the scope of the overall disclosure (including the claims) of the present invention and based on the basic technical concept of the present invention. Various combinations and selections of various disclosed elements (including the elements in each of the claims, examples, drawings, etc.) are possible within the scope of the claims of the present invention. That is, the present invention of course includes various variations and modifications that could be made by those skilled in the art according to the overall disclosure including the claims and the technical concept.

Finally, preferable modes of the present invention will be summarized.

### [First mode]

### (See the communication system according to the above first aspect.)

### [Second mode]

The communication system according to the first mode;
wherein the path calculation policy is configured by weight information set in links or nodes in the physical network topology.

### [Third mode]

The communication system according to the first or second mode;
wherein the control apparatus comprises a path calculation policy determination unit changing the path calculation policy based on statistical information about traffic flowing in the physical network.

### [Fourth mode]

The communication system according to any one of the first to third modes;
wherein the control apparatus further comprises:
a packet feature extraction unit extracting a feature of a packet for which a processing rule (packet handling operation) setting request is supplied from any one of the data forwarding nodes;
a path calculation unit selecting a logical network topology based on the packet feature and calculating a forwarding path for a packet for which a processing rule (packet handling operation) setting request is supplied; and
a processing rule setting unit (packet handling operation setting unit) setting a processing rule (packet handling operation) in which a matching rule matching the packet feature and a processing content realizing the packet forwarding path are associated with each other in packet forwarding nodes on the packet forwarding path.

### [Fifth mode]

The communication system according to any one of the first to fourth modes;
wherein the path calculation policy includes information about an upper-limit band set per link or node in the physical network topology, and the control apparatus sets a processing rule (packet handling operation) for instructing a data forwarding node to discard a packet or change a packet forwarding path so that traffic exceeding an upper-limit band set in a link or a node in the physical network topology does not flow.

### [Sixth mode]

### (See the control apparatus according to the above second aspect.)

### [Seventh mode]

The control apparatus according to the sixth mode;
wherein the path calculation policy is configured by weight information set in links or nodes in the physical network topology.

### [Eighth mode]

The control apparatus according to the sixth or seventh mode, further comprising:
a path calculation policy determination unit changing the path calculation policy based on statistical information about traffic flowing in the physical network.

### [Ninth mode]

The control apparatus according to any one of the sixth to eighth modes, comprising:
a packet feature extraction unit extracting a feature of a packet for which a processing rule (packet handling operation) setting request is supplied from any one of the data forwarding nodes;
a path calculation unit selecting a logical network topology based on the packet feature and calculating a forwarding path for a packet for which a processing rule (packet handling operation) setting request is supplied; and
a processing rule setting unit (packet handling operation setting unit) setting a processing rule in which a matching rule (packet handling operation) matching the packet feature and a processing content realizing the packet forwarding path are associated with each other in packet forwarding nodes on the packet forwarding path.

### [Tenth mode]

The control apparatus according to any one of the sixth to ninth modes;
wherein the control apparatus sets a processing rule (packet handling operation) for instructing a data forwarding node to discard a packet or change a packet forwarding path so that traffic exceeding an upper-limit band set in a link or a node in the physical network topology does not flow.

### [Eleventh mode]

### (See the packet forwarding path control method according to the above third aspect.)

### [Twelfth mode]

### (See the method of controlling the program according to the above fourth aspect.)

The invention is further defined by the following items:
1. A communication system, comprising:
   a plurality of data forwarding nodes each comprising a packet processing unit processing an incoming packet in accordance with a processing rule (packet handling operation) in which a process to be applied to a packet and a matching rule for specifying a packet to which the process is applied are associated with each other; and
   a control apparatus capable of using at least two logical network topologies each obtained by applying a different path calculation policy to a physical network topology formed by the plurality of data forwarding nodes, selecting a logical network topology determined per data traffic and determining a packet forwarding path, and setting a processing rule (packet handling operation) realizing the packet forwarding path in data forwarding nodes on the packet forwarding path.
2. The communication system according to item 1;
   wherein the path calculation policy is configured by weight information set in links or nodes in the physical network topology.
3. The communication system according to item 1 or 2;
   wherein the control apparatus comprises a path calculation policy determination unit changing the path calculation policy based on statistical information about traffic flowing in the physical network.
4. The communication system according to any one of items 1 to 3;
   wherein the control apparatus further comprises:
   a packet feature extraction unit extracting a feature of a packet for which a processing rule (packet handling operation) setting request is supplied from any one of the data forwarding nodes;
   a path calculation unit selecting a logical network topology based on the packet feature and calculating a forwarding path for a packet for which a processing rule (packet handling operation) setting request is supplied; and
   a processing rule setting unit (packet handling operation setting unit) setting a processing rule (packet handling operation) in which a matching rule matching the packet feature and a processing content realizing the packet forwarding path are associated with each other in packet forwarding nodes on the packet forwarding path.
5. The communication system according to any one of items 1 to 4;
   wherein the control apparatus sets a processing rule (packet handling operation) for instructing a data forwarding node to discard a packet or change a packet forwarding path so that traffic exceeding an upper-limit band set in a link or a node in the physical network topology does not flow.
6. A control apparatus,
   connected to a plurality of data forwarding nodes each comprising a packet processing unit processing an incoming packet in accordance with a processing rule (packet handling operation) in which a process to be applied to a packet and a matching rule for specifying a packet to which the process is applied are associated with each other, and
   capable of using at least two logical network topologies each obtained by applying a different path calculation policy to a physical network topology formed by the plurality of data forwarding nodes, selecting a logical network topology determined per data traffic and determining a packet forwarding path, and setting a processing rule (packet handling operation) realizing the packet forwarding path in data forwarding nodes on the packet forwarding path.
7. The control apparatus according to item 6;
   wherein the path calculation policy is configured by weight information set in links or nodes in the physical network topology.
8. The control apparatus according to item 6 or 7, further comprising:
   a packet feature extraction unit extracting a feature of a packet for which a processing rule (packet handling operation) setting request is supplied from any one of the data forwarding nodes;
   a path calculation unit selecting a logical network topology based on the packet feature and calculating a forwarding path for a packet for which a processing rule (packet handling operation) setting request is supplied; and
   a processing rule setting unit (packet handling operation setting unit) setting a processing rule (packet handling operation) in which a matching rule matching the packet feature and a processing content realizing the packet forwarding path are associated with each other in packet forwarding nodes on the packet forwarding path.
9. A packet forwarding path control method, comprising steps of:
   causing a control apparatus, connected to a plurality of data forwarding nodes each comprising a packet processing unit processing an incoming packet in accordance with a processing rule (packet handling operation) in which a process to be applied to a packet and a matching rule for specifying a packet to which the process is applied are associated with each other, to select a logical network topology determined per data traffic from at least two logical network topologies each obtained by applying a different path calculation policy to a physical network topology formed by the plurality of data forwarding nodes and determine a packet forwarding path; and
   causing the control apparatus to set a processing rule (packet handling operation) realizing the packet forwarding path in data forwarding nodes on the packet forwarding path.
10. A program, causing a control apparatus, connected to a plurality of data forwarding nodes each comprising a packet processing unit processing an incoming packet in accordance with a processing rule (packet handling operation) in which a process to be applied to a packet and a matching rule for specifying a packet to which the process is applied are associated with each other, to execute processes of:
   selecting a logical network topology determined per data traffic from at least two logical network topologies each obtained by applying a different path calculation policy to a physical network topology formed by the plurality of data forwarding nodes and determining a packet forwarding path; and
   setting a processing rule (packet handling operation) realizing the packet forwarding path in data forwarding nodes on the packet forwarding path.

### [Reference Signs List]

100 control apparatus
101 physical network topology collection unit
102 path calculation policy determination unit
103 packet feature extraction unit
104 communication information database
105 logical network topology creation unit
106 path calculation unit
107 processing rule setting unit (packet handling operation setting unit)
200 physical network

## Claims

1. A control apparatus, comprising:
a first unit configured to construct a plurality of logical network topologies on a physical network included a plurality of nodes;
a second unit configured to select a logical network topology corresponding to a policy of communication service from the logical network topologies; and
a third unit configured to specify a communication path corresponding to a packet on the physical network based on the selected logical network topology, configured to notify a rule forwarding a packet along the communication path to a node on the communication path.

2. The control apparatus according to claim 1,
wherein the first unit configures different priorities to each link between the nodes of the physical network.

3. The control apparatus according to claim 1,
wherein the first unit configures different priorities to each node of the physical network.

4. A system, comprising:
a first unit configured to construct a plurality of logical network topologies on a physical network included a plurality of nodes;
a second unit configured to select a logical network topology corresponding to a policy of communication service from the logical network topologies; and
a third unit configured to specify a communication path corresponding to a packet on the physical network based on the selected logical network topology, configured to notify a rule forwarding a packet along the communication path to a node on the communication path.

5. The system according to claim 4,
wherein the first unit configures different priorities to each link between the nodes of the physical network.

6. The system according to claim 4,
wherein the first unit configures different priorities to each node of the physical network.

7. A method, comprising:
constructing a plurality of logical network topologies on a physical network included a plurality of nodes;
selecting a logical network topology corresponding to a policy of communication service from the logical network topologies;
specifying a communication path corresponding to a packet on the physical network based on the selected logical network topology; and
notifying a rule forwarding a packet along the communication path to a node on the communication path.

8. The method according to claim 7,
configuring different priorities to each link between the nodes of the physical network.

9. The method according to claim 7,
configuring different priorities to each node of the physical network.
